# EUROPEAN PATENT SPECIFICATION

(11) **EP 0 551 454 B1**
(45) Date of publication and mention of the grant of the patent: **10.09.1997**
(21) Application number: 92912041.8
(22) Date of filing: 11.06.1992
(51) Int. Cl.: B60S 1/34

(54) **A DEVICE IN WINDSCREEN WIPER ARMS FOR MOTOR VEHICLES**
VORRICHTUNG FÜR DEN SCHEIBENWISCHERARM EINES KRAFTFAHRZEUGES
DISPOSITIF POUR BRAS D'ESSUIE-GLACES DE VEHICULES AUTOMOBILES

(30) Priority: 11.06.1991 SE 9101767
(43) Date of publication of application: 21.07.1993
(73) Proprietor: AB VOLVO, 405 08 Göteborg (SE)
(72) Inventor: SVÄRD, Rune, S-415 06 Göteborg (SE); FINN, Asp, S-424 38 Angered (SE)
(86) International application number: SE9200410
(87) International publication number: WO9222444

(56) References cited:
- EP-A- 0 234 286
- DE-A- 2 458 199
- DE-A- 3 346 384
- SE-A- 382 950
- US-A- 437 641

## Description

### TECHNICAL FIELD

The invention refers to a device for windscreen wiper arms according to the preamble of claim 1.

### STATE OF THE ART

Windscreen wiper arms are manufactured primarily with the aim of ensuring efficient wiping-off of liquid from the windscreen at vehicle speeds of up to approximately 200 km/h. The wiper arms are manufactured in standardized configurations for a large number of car manufacturers, the variations between different car models being slight.

One problem that arises primarily with passenger cars, is the noise that is generated by the air currents around the front windscreen wiper arms at certain speed levels. This phenomen, known as the "Karman tone", may give rise to a clear high-pitched hissing sound that is discernable above the other wind-generated noise and is clearly audible from within the vehicle compartment.

A device for windscreen wiper arms according to the preamble of claim 1 is disclosed in DE-A-2 458 199. SE-A- 382 950 teaches the use of a coiled wire mesh to reduce wind noise around a tube of e.g. a roof rack.

### DEFINITION OF THE TECHNICAL PROBLEM

One purpose of the subject invention therefore is to provide a device for windscreen wiper arms by means of which the problem of current-induced noise is solved in a simple manner and without involving any major alterations of already existing systems

### THE SOLUTION

In accordance with the teachings of the invention, this problem is solved by the features according to claim 1.

### BRIEF DESCRIPTION OF THE DRAWINGS

Three embodiments of the invention will be described in closer detail in the following with reference to the accompanying drawings, wherein
- Figs. 1 - 3: illustrate three different versions of a rod for use together with a windscreen wiper arm, and
- Fig. 4: is a sectional view along line VI-VI of Fig. 3.

### PREFERRED EMBODIMENTS

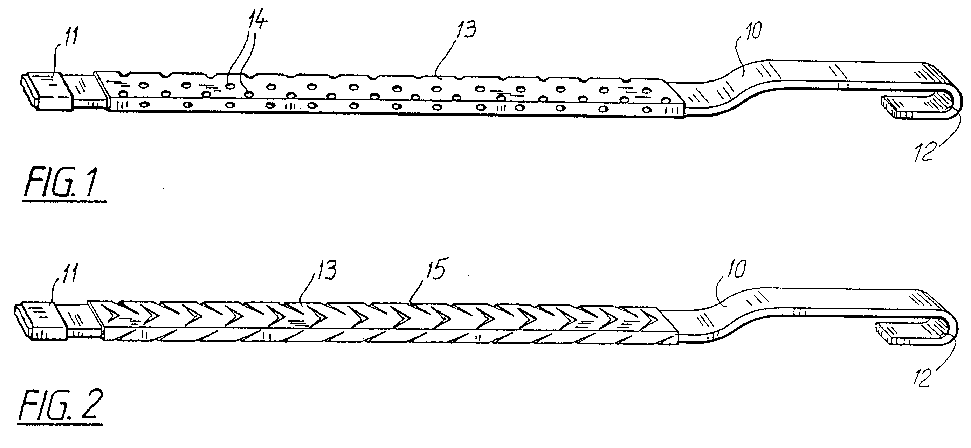

The wiper arm rod 10 illustrated in Figs. 1-4 is mounted in any conventional manner in a pivotable attachment arm, the latter indicated by reference 11, whereas the opposite end supports means for securement of a wiper blade, not shown. The rod 10 is made from spring steel having a predetermined radius of curvature in order to serve as a spring element between the rigid attachment arm and the wiper blade which is mounted in the U-shaped end portion 12 of the arm.

Fig. 1 illustrates the first embodiment of the invention, according to which the rod is provided with an additional part 13 in the form of a C-shaped sheet-metal member formed with essentially circular perforations and clamped onto the rod. The perforations 14 are intended to disturb the flow of the air past the wiper arm rod, creating an irregular flow pattern, which prevents the generation of a strong clear resonance note.

Fig. 2 illustrates the second embodiment of the invention according to which the additional part 13 consists of a member of expanded sheet metal formed with slit-like perforations. The sheet-metal edges which upon expansion of the sheet metal will project on either side of the slits 15 positively prevent regular, noise-generating vortices from forming around the rod.

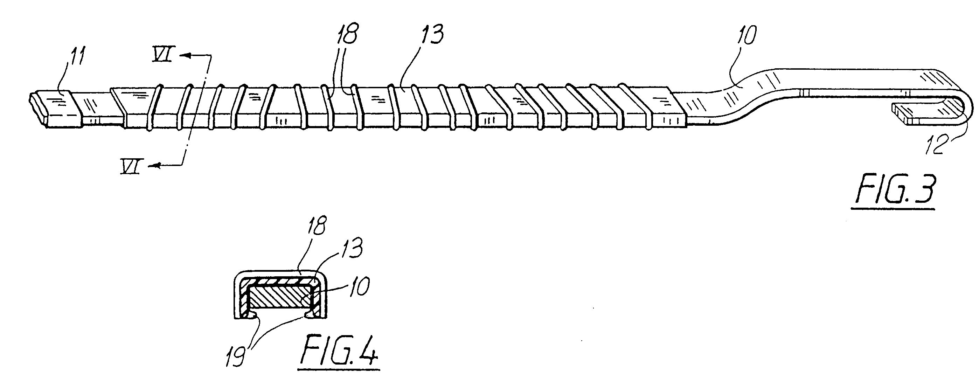

Fig. 3, finally, illustrates the third embodiment of the invention according to which the addition 13 is a plastics casting exhibiting a number of ribs or ridges 16 extending obliquely across the flat upper face of the addition.

Fig. 4 illustrates the additional part 13 in accordance with Fig. 3 in a cross-sectional view, this drawing figure showing the manner in which the additional part 13 is cast integrally with a ridge 18 and retainment shoulders 19.

Practical tests have demonstrated the ability of the devices described in the aforegoing to dampen the hissing sound down to the level of the ordinary airstream noise.

The invention is not limited to the embodiment described in the aforegoing but further modifications are possible within the scope of the appended claims.

## Claims

1. A device for windscreen wiper arms comprising at least one rod (10) made from spring steel, one end of said rod being mounted in a pivotable attachment arm (11) whereas the opposite arm end supports means (12) designed to secure a wiper blade, and that noise preventing means (13-18) formed on the surface of the rod is shaped as to disturb the flow path of a passing current of air , so that the air current forms irregular vortices of air downstream of the rod, **characterized** in that the noise preventing means (13-18) is formed by one or more additional parts (13) mounted on the rod (10), whereby one such part is shaped into a strip (13) having a C-shaped configuration and having a surface structure (14,15,18) adapted to induce irregular air vortices.

## Patentansprüche

1. Vorrichtung für Scheibenwischerarme, bestehend aus einer Stange (10) aus Federstahl, von der ein Ende in einem schwenkbaren Befestigungsarm (11) montiert ist, während das gegenüberliegende Armende eine Einrichtung (12) trägt, die zur Befestigung eines Wischerblattes dient, und wobei eine auf der Oberfläche der Stange gebildete Geräuschvermeidungseinrichtung (13-18) so gestaltet ist, daß sie den Strömungsweg von passierender Luftströmung derart stört, daß die Luftströmung irreguläre Luftwirbel stromabwärts der Stange bildet,
dadurch gekennzeichnet,
daß die Geräuschvermeidungseinrichtung (13-18) durch einen oder mehrere zusätzliche Abschnitte (13) gebildet ist, die auf der Stange (10) montiert sind, wobei ein derartiger Abschnitt als Streifen (13) geformt ist, der eine C-förmige Konfiguration und eine Oberflächenstruktur (14, 15, 18) besitzt, durch die irreguläre Luftwirbel induzierbar sind.

## Revendications

1. Un dispositif pour les bras d'essuie-glace comprenant au moins une tringle (10) faite d'acier flexible, l'une des extrémités de ladite tringle étant assemblée en bras d'attache pivotant (11) alors que l'autre extrémité soutien un moyen (12) destiné à retenir un balai d'essuie-glace, et qu'un moyen destiné à empêcher le bruit (13-18), assemblé à la surface de la tringle, est profilé de telle sorte qu'il perturbe la trajectoire d'un courant d'air qui passe, en sorte que le courant d'air forme des tourbillons d'air irréguliers en aval de la tringle,
caractérisé en ce que le moyen destiné à empêcher le bruit (13-18) est constitué d'une ou de plusieurs pièces additionelles (13) assemblées sur la tringle (10), où l'une de ces pièces est modelée en lamelle (13) ayant une configuration en forme de C et ayant une structure de surface (14,15,18) adaptée à induire des tourbillons d'air irréguliers.
